Europäisches Patentamt

European Patent Office

Office européen des brevets

(19)

(11) Veröffentlichungsnummer: **0 356 469 B1**

# (12) EUROPÄISCHE PATENTSCHRIFT

(45) Veröffentlichungstag der Patentschrift:
18.09.91 Patentblatt 91/38

(51) Int. Cl.⁵: **F02D 41/40**

(21) Anmeldenummer: **89901456.7**

(22) Anmeldetag: **21.01.89**

(86) Internationale Anmeldenummer:
**PCT/DE89/00032**

(87) Internationale Veröffentlichungsnummer:
**WO 89/07708 24.08.89 Gazette 89/20**

(54) **KRAFTSTOFFEINSPRITZPUMPE FÜR BRENNKRAFTMASCHINEN.**

(30) Priorität: **18.02.88 DE 3805033**

(43) Veröffentlichungstag der Anmeldung:
**07.03.90 Patentblatt 90/10**

(45) Bekanntmachung des Hinweises auf die
Patenterteilung:
**18.09.91 Patentblatt 91/38**

(84) Benannte Vertragsstaaten:
**DE FR GB**

(56) Entgegenhaltungen:
**US-A- 4 475 507**

(56) Entgegenhaltungen:
Patent Abstracts of Japan, vol.6, no.89
(M-132)(967), 27. Mai 1982, & JP, A, 5726261
(Diesel Kiki K.K.) 12. Februar 1982
Patent Abstracts of Japan, vol. 9, Nr. 235
(M-415)(1958), 21. September 1985, & JP, A,
6090951 (Toyota Jidosha K.K.) 22. Mai 1985

(73) Patentinhaber: **ROBERT BOSCH GmbH**
**Postfach 10 60 50**
**W-7000 Stuttgart 10 (DE)**

(72) Erfinder: **KARLE, Anton**
**Otto-Hahn-Str. 5**
**W-7250 Leonberg 6 (DE)**
Erfinder: **PAPE, Werner**
**37, cours Vitton**
**F-69006 Lyon (FR)**

## Beschreibung

### Stand der Technik

Die Erfindung betrifft eine Kraftstoffeinspritzpumpe, insbesondere der Verteilerbauart, für Brennkraftmaschinen, der im Oberbegriff des Anspruchs 1 definierten Gattung.

Bei einer bereits vorgeschlagenen Kraftstoffeinspritzpumpe der Verteilerbauart (deutsche Patenanmeldung P 3721352.0) wird der einspritzwirksame Sollförderhub als Umdrehungswinkel $\varphi_Q$ des Pumpenkolbens ermittelt, der diesem Sollförderhub entspricht. Da das Steuergerät nur Zeiten, nicht aber Drehwinkel verarbeiten kann, ist ein Winkel-Zeit-System vorgesehen, mit welchem die Zeit $T_0$ gemessen wird, die der Pumpenkolben benötigt, um ein über einen vorgegebenen konstanten Umdrehungswinkel $\varphi_0$ aufgespanntes Meßfenster zu durchlaufen. Mit dieser Meßzeit $T_0$ und dem konstanten Umdrehungswinkel $\varphi_0$ wird dann die Schließdauer $T_Q$ berechnet, während welcher der ermittelte Sollförderhub vom Pumpenkolben ausgeführt wird. Die Schließzeit berechnet sich dabei gemäß $T_Q = T_0 \cdot \varphi_Q/\varphi_0$.

Um Zumeßfehler infolge von Drehzahländerungen zwischen der Zeitmessung und der eigentlichen Zumessung möglichst klein zu halten, hat man die Zeitmessung so nahe wie möglich an den einspritzwirksamen Förderhub des Pumpenkolbens gelegt und spannt das Zeitmeßfenster im Bereich der unteren Totpunktlage des Pumpenkolbens auf. Trotzdem sind durch nachweisbar auftretende Drehzahländerungen zwischen dem Bereich der unteren Totpunktlage und dem Förderhubbereich Fehlzumessungen nicht zu vermeiden, die in einem Mitkopplungseffekt zu einer wesentlich abweichenden Drehzahleinstellung der Brennkraftmaschine führen.

Bei einer bekannten Kraftstoffeinspritzpumpe der Verteilerbauart (US-PS 4475507) sind am Umfang des Pumpenkolbens in der Sequenz der Pumpenkolbenförderhübe Steuermarken verteilt angeordnet, die nacheinander mit einem Hubstellungsgeber zusammenarbeiten. Auf diese Weise werden sequentielle Signale erzeugt, die die untere Totpunktlage des Pumpenkolbens vor dessen Förderhubbeginn kennzeichnen. Mit diesen Steuersignalen wird das Schaltventil, das die Verbindung zwischen Pumpenarbeitsraum und Entlastungs- oder Niederdruckraum steuert, angesteuert und in Schließstellung gebracht. Mit Hilfe eines Winkelsegmentgebers werden Drehwinkelsegmente in der Folge ausgezählt und mit einem Sollwinkel solange verglichen, bis Übereinstimmung herrscht. Ab diesem Punkt wird das Schaltventil wieder geöffnet, wodurch die Einspritzung beendet ist. Der Sollwinkel setzt sich zusammen aus einem Vorhubwinkel und einem Einspritzwinkel, welche beide aus einem Kennfeld entsprechend vorgegebenen Parametern abgegriffen werden. Der Nachteil dieser Steuerung des Schaltventils liegt darin, daß ein genau gefertigtes Segmentrad hergestellt werden muß mit einwandfreier Pulserkennung. Ferner läßt sich die Pulsfolge bzw. die Kleinstaufteilung in Winkelsegmente mit vertretbarem Aufwand nicht beliebig verfeinern, so daß aufgrund dieser begrenzten Auflösung die Zumeßgenauigkeit der Kraftstoffeinspritzmenge beschränkt ist.

### Vorteile der Erfindung

Die erfindungsgemäße Kraftstoffeinspritzpumpe mit den Merkmalen des Anspruchs 1 hat den Vorteil, mit den für einen gewünschten Betriebszustand der Brennkraftmaschine ermittelten Sollförderhub des Pumpenkolbens direkt Förderbeginn und Förderende zu steuern. Ein aufwendiges System zur Umrechnung in andere Steuergrößen wird vermieden. Im Gegensatz zu der Kraftstoffeinspritzpumpe mit Weg-Zeit-System hat die Momentandrehzahl der Brennkraftmaschine keine Rückwirkung auf die Zumessung. Weder der üblicherweise vorhandene Spritzversteller noch die Drift der Kraftstoffeinspritzpumpe haben Einfluß auf die Zumessung der Kraftstoffeinspritzmenge. Der mit Schließen des Schaltventils festgesetzte Förderbeginn kann auf einen vorgegebenen Nockenhub im Bereich der ansteigenden Flanke des Nockens oder vor den Nockenbeginn (Hub des Pumpenkolbens gleich Null) gelegt werden. Das Förderende wird durch Öffnen des Schaltventils bewirkt, sobald der gemessene Istförderhub des Pumpenkolbens mit dem Sollförderhub übereinstimmt.

Durch die in den weiteren Ansprüchen aufgeführten Maßnahmen sind vorteilhafte Weiterbildungen und Verbesserungen der im Anspruch 1 angegebenen Kraftstoffeinspritzpumpe möglich.

Eine vorteilhafte Ausführungsform ergibt sich dabei aus Anspruch 2 oder Anspruch 3. In beiden Fällen wird der Hubgeber in jeder Hubperiode "geeicht" und somit ein evtl. Driften und seine Temperaturabhängigkeit kompensiert. Die jeweils angegebenen Maßnahmen sind gleichwertig und lassen sich ineinander überführen.

Bei der erfindungsgemäßen Kraftstoffeinspritzpumpe können sich Zumeßfehler allein durch die konstanten Schaltzeiten des Schaltventils ergeben. So weist ein als Schaltventil üblicherweise verwendetes 2/2-Wegemagnetventil in bekannter Weise eine Einschaltverzögerungszeit und eine Ausschaltverzögerungszeit auf. Das Magnetventil schließt und öffnet auch nicht schlagartig, vielmehr ist hier eine Einschaltflugzeit und eine Ausschaltflugzeit für das Ventilglied bis zum vollständigen Schließen und Öffnen zu berücksichtigen. Werden gemäß der Ausführungsform der Erfindung nach Anspruch 6 die Schaltzeiten des Magnetventils abhängig von der Drehzahl des Pumpenkolbens als einspritzwirksame Förderhübe in einem sog. Kennfeld abgelegt, so können diese Hubwege bei der Ansteuerung des Schaltventils berücksichtigt werden.

Zeichnung

Die Erfindung ist anhand eines in der Zeichnung dargestellten Ausführungsbeispiels in der nachfolgenden Beschreibung näher erläutert. Es zeigen :

Fig. 1        einen Längsschnitt einer Kraftstoffeinspritzpumpe der Verteilerbauart,

Fig. 2        in zeitlicher Zuordnung ausschnittweise Diagramme des zeitlichen Verlaufs der Nockenerhebungskurve (a) am Nockenantrieb der Kraftstoffeinspritzpumpe nach Fig. 1, des Ausgangssignals (b) eines Hubgebers, der Steuerspannung (c) an einem Magnetventil bzw. an einem Steuergerät der Kraftstoffeinspritzpumpe in Fig. 1 und des Bewegungshubs (d) des Ventilglieds des Magnetventils,

Fig. 3 und 4        jeweils ein Blockschaltbild des Steuergräts der Kraftstoffeinspritzpumpe in Fig. 1 gemäß einem ersten und zweiten Ausführungsbeispiel.

Beschreibung des Ausführungsbeispiels

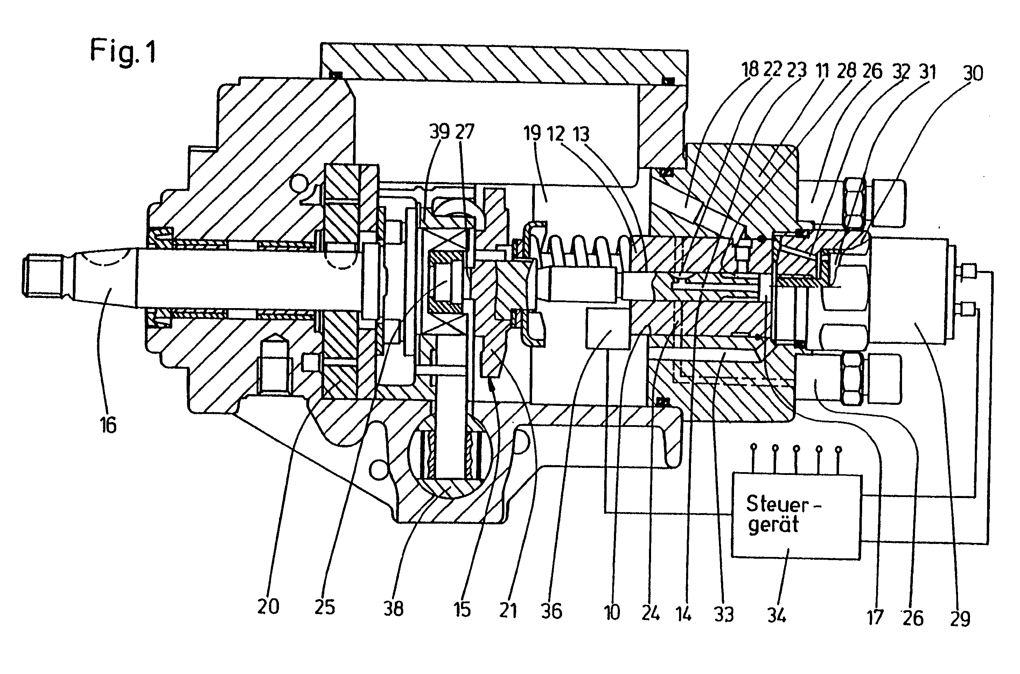

Bei der in Fig. 1 im Längsschnitt dargestellten Kraftstoffeinspritzpumpe der Verteilerbauart ist in einer Bohrung 10 eines Gehäuses 11 eine Buchse 12 angeordnet, in deren Zylinderbohrung 13 ein Pumpenkolben 14 in bekannter Weise eine hin- und hergehende und zugleich rotierende Bewegung ausführt. Der Pumpenkolben 14 ist durch einen Nockenantrieb 15 über eine Welle 16 angetrieben, welche synchron zu der Drehzahl der von der Kraftstoffeinspritzpumpe mit Kraftstoff versorgten Brennkraftmaschine rotiert. Von der Stirnfläche des Pumpenkolbens 14 wird ein Pumpenarbeitsraum 17 begrenzt, welcher über einen Versorgungskanal 18 mit einem Kraftstoffniederdruckraum oder Saugraum 19 im Gehäuse 11 der Kraftstoffeinspritzpumpe verbunden ist. Der Saugraum 19 wird über eine Förderpumpe 20, die auf der Welle 16 drehfest sitzt, mit Kraftstoff versorgt, den die Förderpumpe 20 aus einem nicht dargestellten Kraftstoffvorratsbehälter absaugt. Aus dem Pumpenarbeitsraum 17 wird über eine Verteileröffnung 22, die am Umfang des Pumpenkolbens 14 mündet und über einen Axialkanal 23 ständig mit dem Pumpenarbeitsraum 17 verbunden ist, der Kraftstoff bei entsprechender Drehung des Pumpenkolbens 14 zu strichliniert dargestellten Druckleitungen 24 hin verteilt. Die Druckleitungen 24 führen zu Einspritzdüsen 26 der Brennkraftmaschine. Die Anzahl der von der Verteileröffnung 22 versorgten Druckleitungen 24 entspricht der Zahl der zu versorgenden Einspritzdüsen 26 der Brennkraftmaschine. Eine gleiche Anzahl von Nocken 27 sind im Nockenantrieb 15 vorgesehen. Bei dem hier als Beispiel einer Brennkraftmaschine dargestellten vierzylindrigen Verbrennungsmotor mit jeweils einer Einspritzdüse pro Verbrennungszylinder sind insgesamt vier Druckleitungen 24, vier Einspritzdüsen 26 und vier Nocken 27 im Nockenantrieb 15 vorhanden. Der Drehwinkelabstand der Nocken 27 im Nockenantrieb 15 beträgt dabei 90°. Die Nocken 27 sind dabei auf der Stirnseite eines mit dem Pumpenkolben 14 drehfest verbundenen Tellers 21 angeordnet und rollen sich bei Drehung des Tellers 21 auf Rollen 25 eines Rollenrings 39 ab, der mit einem Spritzversteller 38 mechanisch verbunden ist. In dem dem Pumpenarbeitsraum 17 zugewandten Endbereich des Pumpenkolbens 14 sind zur Stirnfläche und damit zum Pumpenarbeitsraum 17 hin offene Längsnuten 28 am Umfang des Pumpenkolbens 14 vorgesehen, über die während des Saughubs des Pumpenkolbens 14 eine Verbindung zwischen dem Versorgungskanal 18 und dem Pumpenarbeitsraum 17 hergestellt wird.

Der Buchse 12 und der den Pumpenarbeitsraum 17 begrenzenden Stirnfläche des Pumpenkolbens 14 gegenüberliegend ist ein als 2/2-Wegemagnetventil ausgebildetes Schaltventil 29 in die Bohrung 10 eingeschraubt, so daß der Pumpenarbeitsraum 17 von dem Ventilgehäuse 30 abgeschlossen ist. Der Ventilraum 31 des Schaltventils 29 steht einerseits über eine Zulaufbohrung 32 mit dem Pumpenarbeitsraum 17 und andererseits über eine nicht zu sehende Ablaufbohrung mit einer durch das Gehäuse 11 bis in den Saugraum 19 führenden Absteuerbohrung 33 in Verbindung. Je nach Schaltstellung des Schaltventils 29 ist damit der Pumpenarbeitsraum 17 hermetisch geschlossen oder mit dem Saugraum 19 verbunden. Das Schaltventil 29 ist dabei so ausgelegt, daß in der unbestromten Ruhestellung die Verbindung zum Saugraum 19 hergestellt ist und in der bestromten Arbeitsstellung der Pumpenarbeitsraum 17 verschlossen ist. Das Magnetventil 29 wird von einem Steuergerät 34 gesteuert, das einen Steuerrechner 35 enthält, der in Abhängigkeit von Betriebsparametern der Brennkraftmaschine, wie Drehzahl, Last, Stellung des Fahrpedals, Temperatur u.dgl., die für einen optimalen Betrieb der Brennkraftmaschine erforderliche Kraftstoffeinspritzmenge errechnet. Eine bestimmte Kraftstoffeinspritzmenge erfordert einen bestimmten Förderhub des Pumpenkolbens 14, der vom Steuerrechner 35 anhand der ihm zugeführten Betriebsdaten aus abgespeicherten Kennfeldern ermittelt wird.

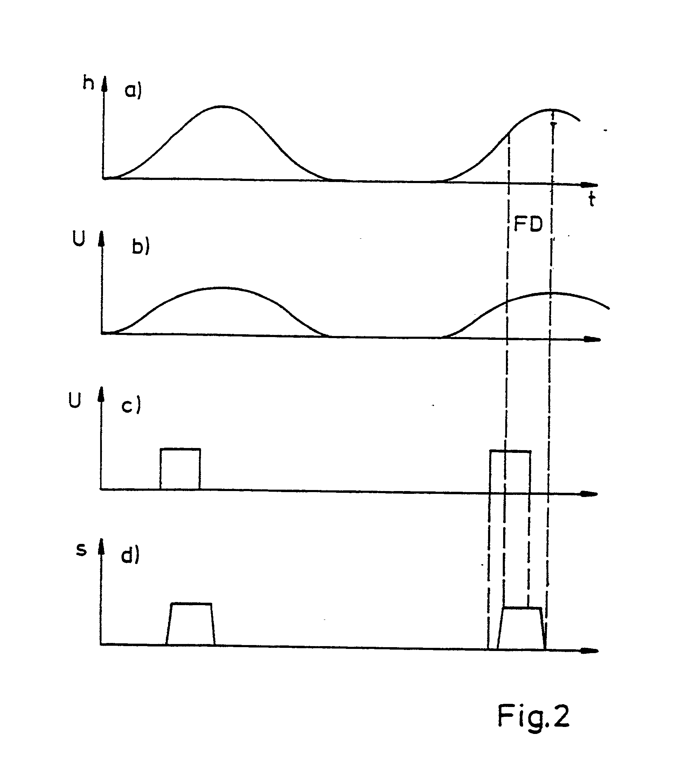

Im Saugraum 19 ist ein Hubgeber 36 feststehend angeordnet, der den Hubweg des Pumpenkolbens 14 als elektrisches Isthubsignal ausgibt. Der Hubgeber 36 tastet den Hubweg des Pumpenkolbens 14 berührungslos, z.B. induktiv oder elektromagnetisch, ab und kann als Hallsensor, Induktionsaufnehmer, Feldplatte oder Wirbelstromgeber ausgebildet sein. Das in Fig. 2b dargestellte Ausgangssignal des Hubgebers 36 ist proportional dem Hubverlauf bzw. der Nockenerhebungskurve, wie diese in Fig. 2a dargestellt ist. Das Ausgangssignal oder Isthubsignal des Hubgebers 36 wird dem Steuergerät 34 zugeführt und dort einerseits mit einem einem vorgegebenen Hub des Pumpenkolbens 14, der auch Null sein kann, entsprechenden Referenzsignal und andererseits mit dem vom Steuerrechner 35 gelieferten Sollhubsignal laufend verglichen. Sobald das Isthubsignal gleich dem Referenzsignal ist, generiert das Steuergerät 34 ein Schließsignal für das Schaltventil 29, und sobald das Isthubsignal gleich dem Sollhubsignal ist, generiert der Steuerrechner 35 ein Öffnungssignal für das Schaltventil 29. Mit dem Schließsignal wird eine Erregerspannung (Fig. 2c) an die Erregerwicklung des Schaltventils 29 gelegt. Mit dem Öffnungssignal fällt die Erregerspannung weg. Das Schaltventil 29 ist damit zwischen dem Schließsignal und dem Öffnungssignal geschlossen. Infolge der unvermeidlichen Schaltzeiten eines Magnetventils schließt und öffnet das Schaltventil 29 nicht schlagartig sondern — wie dies in Fig. 2d zu sehen ist — mit einer gewissen Verzögerung.

Durch den Antrieb der Antriebswelle 16 wird der Pumpenkolben 14 gedreht und führt infolge der mitdrehenden, sich auf den Rollen 25 des Rollenrings 39 abrollenden Nocken 27 neben der Drehbewegung eine hin- und hergehende Pumpbewegung aus. Befindet sich dabei der Pumpenkolben 14 auf der abfallenden Flanke der Nockenerhebungskurve (Fig.2a), so führt er in bekannter Weise einen Saughub durch, bei welchem der Pumpenarbeitsraum 17 mit Kraftstoff aus dem Saugraum 19 gefüllt wird. Nach Durchgang durch die untere Totpunktlage wird der Pumpenkolben 14 durch die ansteigende Nockenkurve des folgenden Nockens 27 in einem Aufwärtshub, dem sog. Förderhub, angetrieben. Während der Schließzeit des Schaltventils 29 ist die Verbindung zu dem Saugraum 19 unterbrochen. Der von dem Pumpenkolben 14 verdrängte Kraftstoff wird nunmehr über die Verteileröffnung 22 in eine der Druckleitungen 24 gefördert, mit der die Verteileröffnung 22 gerade entsprechend der Drehstellung des Pumpenkolbens 14 in Verbindung ist. Sobald das Schaltventil 29 wieder öffnet, bricht der Hochdruck im Pumpenarbeitsraum 17 zusammen und der restliche, vom Pumpenkolben 14 geförderte Kraftstoff wird bis zur Erreichung der oberen Totpunktlage des Pumpenkolbens 14 über das geöffnete Schaltventil 29 in den Saugraum 19 ausgeschoben. Bei der sich anschließenden Abwärtsbewegung des Pumpenkolbens 14 wird der Pumpenarbeitsraum 17, wie vorstehend beschrieben, wieder mit Kraftstoff gefüllt. Die Förderdauer ist in Fig. 2 eingezeichnet und mit FD bezeichnet.

Um Temperatureinflüsse auf das Isthubsignal und ein Driften des Hubgebers 36 zu kompensieren, wird das Isthubsignal bezogen auf den maximalen Isthub des Pumpenkolbens 14. Dieser maximale Isthub des Pumpenkolbens wird im vorausgehenden Hub von dem Hubgeber 36 gemessen und im Steuergerät 34 abgespeichert. Im einzelnen sind hierzu zwei Möglichkeiten gegeben, die zu dem gleichen Ergebnis führen.

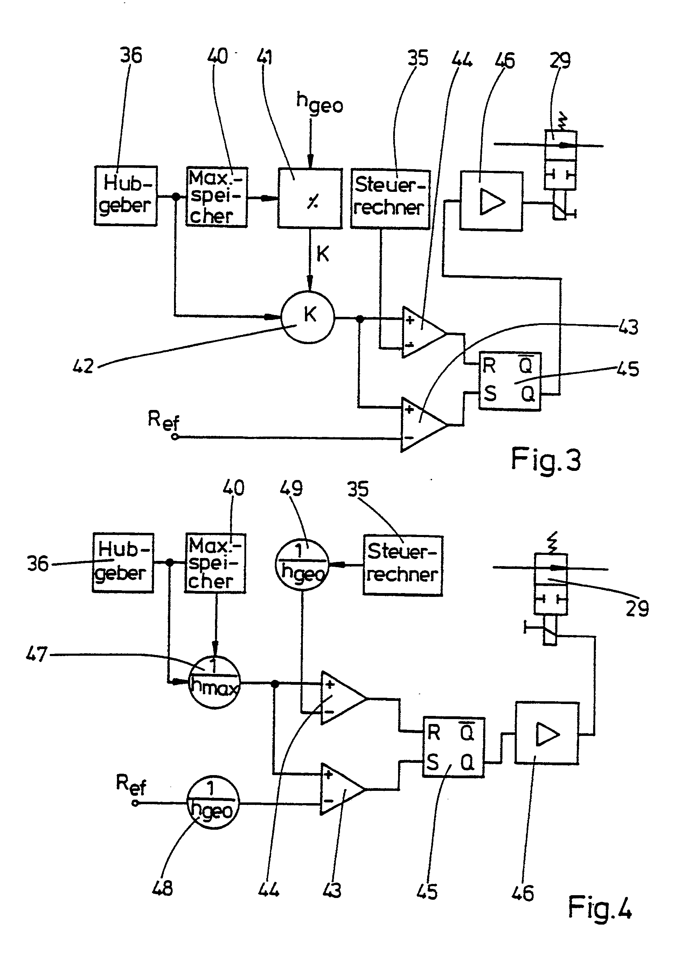

In dem in Fig. 3 im Blockschaltbild dargestellten ersten Ausführungsbeispiel des Steuergeräts 34 ist das Isthubsignal des Hubgebers 36 einem Maximumspeicher 40 zugeführt, der jeweils das beim vorhergehenden Pumpenkolbenhub ermittelte größte Isthubsignal speichert. Am Ende des nachfolgenden Pumpenkolbenhubs wird dieses gespeicherte Maximumsignal $h_{max}$ in einem Quotientenbildner 41 ins Verhältnis gesetzt zu dem bekannten geometrischen Maximalhub $h_{geo}$ des Pumpenkolbens 14, der aufgrund der Konstruktionsunterlagen bekannt ist. Am Ausgang des Quotientenbildners 41 ist damit ein Wichtungsfaktor $k = h_{geo}/h_{max}$ abnehmbar. Dieser Wichtungsfaktor k wird einer Wichtungsstufe 42 zugeführt, in welcher das vom Hubgeber 36 ausgegebene Isthubsignal laufend mit dem Wichtungsfaktor k gewichtet, d.h. in der Amplitude multipliziert wird. Der Ausgang der Wichtungsstufe 42 ist jeweils dem nicht invertierenden Eingang eines ersten und zweiten Komparators 43, 44 zugeführt. Der Ausgang des ersten Komparators 43 ist auf den Set-Eingang eines flankengetriggerten RS-Flip-Flops 45 gelegt, während der Ausgang des zweiten Komparators 44 an dem Reset-Eingang des RS-Flip-Flops 45 liegt. Der Q-Ausgang des RS-Flip-Flops 45 ist über einen Verstärker 46 mit der Erregerwicklung des Schaltventils 29 verbunden. An dem invertierenden Eingang des zweiten Komparators 44 liegt das vom Steuerrechner 35 ermittelte Sollhubsignal, während der invertierende Eingang des ersten Komparators 43 mit einem Referenzsignal oder Schwellwert belegt ist, das oder der einem vorgegebenen Hub des Pumpenkolbens 40 entspricht, bei welchem der Förderbeginn einsetzen soll. Wird der Förderbeginn in den Nockenbeginn gelegt, so ist dieses Referenzsignal Null. Während des Pumpenkolbenhubs wird das gewichtete Isthubsignal am Ausgang des Hubgebers 36 laufend im ersten Komparator 43 mit dem Referenzsignal und im zweiten Komparator 44 mit dem Sollhubsignal verglichen. Sobald das gewichtete Isthubsignal das Referenzsignal erreicht oder übersteigt, wird das Flip-Flop 45 gesetzt, und an dessen Q-Ausgang tritt High-Potential auf. Das verstärkte High-Potential liegt als Erregerspannung an dem Schaltventil 29 und dieses schließt. Nunmehr wird Kraftstoff aus dem Pumpenarbeitsraum 17 zu den einzelnen Einspritzdüsen 26 gefördert. Sobald das gewichtete Isthubsignal das vom Steuerrechner 35 vorgegebene Sollhubsignal erreicht oder übersteigt, springt das Ausgangssignal des zweiten Komparators 44 von Low auf High. Diese ansteigende Potentialflanke bewirkt ein Rücksetzen des Flip-Flops 45, so daß dessen Q-Ausgang wieder Low-Potential annimmt und die Magneterregung des Schaltventils 29 wegfällt. Das Schaltventil 29 öffnet unter der Wirkung einer Rückführfeder. Die Kraftstoffeinspritzung ist beendet.

Bei dem Ausführungsbeispiel des Steuergeräts 34 in Fig. 4 wird wiederum das Isthubsignal vor Anlegen an den nicht invertierenden Eingang der beiden Komparatoren 43, 44 in einer Wichtungsstufe 47 mit einem ersten Wichtungsfaktor gewichtet. Dieser Wichtungsfaktor ist der reziproke Wert des vom Hubgeber 36 im vorhergehenden Hub gemessenen und im Maximumspeicher 40 abgespeicherten maximalen Isthubs $h_{max}$ des Pumpenkolbens 14. Zusätzlich werden das Referenzsignal und das Sollhubsignal ebenfalls in einer Wichtungsstufe 48 bzw. 49 mit einem zweiten Wichtungsfaktor gewichtet. Dieser Wichtungsfaktor ist der reziproke Wert des bekannten geometrischen Maximalhubs $h_{geo}$ des Pumpenkolbens 14 aufgrund seiner konstruktiven Gegebenheiten. Alle gewichteten Signale werden in der gleichen Weise an die Komparatoren 43 und 44 gelegt, wie dies zu Fig. 3 beschrieben ist. Im übrigen stimmt das Steuergerät 34 nach Fig. 4 mit dem Steuergerät 34 in Fig. 3 überein, so daß gleiche Schaltungsteile mit gleichen Bezugszeichen versehen sind. Durch das in Bezugsetzen des bei jedem Pumpenkolbenhub vom Hubgeber 36 gemessenen maximalen Isthubs zu dem kontruktiv vorgegebenen geometrischen Maximalhub des Pumpenkolbens 14 wird bei beiden Steuergeräten 34 eine Drift des Hubgebers 36 kompensiert, so daß hierdurch keine Fehler in der Zumessung der Kraftstoffeinspritzmenge auftreten können.

Einzige Zumeßfehler von relativ kleiner Größe entstehen durch die konstanten Schaltzeiten des Schaltventils 29, wie dies im Vergleich der Diagramme in Fig. 2c und Fig. 2d zu erkennen ist. Da die Pumpenkolbengeschwindigkeit proportional der Drehzahl der Brennkraftmaschine ist, wird der bei der Zumessung infolge der Schaltzeiten des Schaltventils 29 gemachte Fehler bei hohen Drehzahlen sehr viel größer sein als bei kleinen Drehzahlen. Diesen Fehler kann man vermeiden, wenn man diese Schaltzeiten als Hubkorrekturen in Abhängigkeit von der mittleren Drehzahl der Brennkraftmaschine in sog. Kennfeldern ablegt und diese Hubkorrekturen beim Vergleich des Isthubsignals einerseits mit dem Referenzsignal und andererseits mit dem Sollhubsignal berücksichtigt. Da diese Kennfelder im Steuerrechner 35 abgelegt sind und die Hubkorrekturen vom Steuerrechner ermittelt werden, sind diese Hubkorrekturen am einfachsten durch entsprechende Korrektur des Sollhubsignals und des Referenzsignal zu berücksichtigen.

## Patentansprüche

1. Kraftstoffeinspritzpumpe, insbesondere der Verteilerbauart, für Brennkraftmaschinen mit einem einen Pumpenarbeitsraum begrenzenden Pumpenkolben, der insbesondere mittels eines Nockenantriebs in zumindest eine axial oszillierende Bewegung versetzt wird, mit einem in einer Verbindungsleitung zwischen dem Pumpenarbeitsraum und einem kraftstoffgefüllten Niederdruckraum angeordneten elektrisch gesteuerten Schaltventil mit zwei Schaltstellungen zum Öffnen und Schließen der Verbindungsleitung, dessen Schließ- oder Sperrdauer den Förderbeginn und die pro Pumpenkolbenhub aus dem Pumpenarbeitsraum zur Einspritzung gelangende Kraftstofffördermenge festlegt, und mit einem Steuergerät zum Ansteuern des Schaltventils, das einen Steuerrechner enthält, der in Abhängigkeit von Betriebsparametern der Brennkraftmaschine, wie Drehzahl, Last, Temperatur, Fahrpedalstellung u.dgl., den einspritzwirksamen Sollförderhub des Pumpenkolbens berechnet, insbesondere aus einem abgespeicherten Kennfeld ermittelt, und als Sollhubsignal ausgibt, dadurch gekennzeichnet, daß ein den Hubweg des Pumpenkolbens (14) erfassender Hubgeber (36) vorgesehen ist, der den von einem Bezugspunkt aus vom Pumpenkolben (14) zurückgelegten Förderhub als Isthubsignal ausgibt, daß im Steuergerät (34) das Isthubsignal einerseits mit einem einem vorgegebenen Kolbenhub des Pumpenkolbens entsprechenden Referenzsignal und andererseits mit dem Sollhubsignal verglichen wird und daß das Steuergerät (34) ein Schließsignal für das Schaltventil (29) generiert, sobald das Isthubsignal gleich dem Referenzsignal ist, und ein Öffnungssignal für das Schaltventil (29) generiert, sobald das Isthubsignal gleich dem Sollhubsignal ist.

2. Pumpe nach Anspruch 1, dadurch gekennzeichnet, daß vor Vergleich das Isthubsignal mit einem Korrekturfaktor (k) gewichtet wird und daß der Korrekturfaktor (k) als Quotient aus dem konstruktiv vorgegebenen geometrischen Maximalhub ($h_{geo}$) des Pumpenkolbens (14) und dem bei der vorhergehenden Hubperiode vom Hubgeber (36) gemessenen Maximalhub ($h_{max}$) des Pumpenkolbens (14) berechnet wird.

3. Pumpe nach Anspruch 1, dadurch gekennzeichnet, daß vor Vergleich das Isthubsignal auf den in der vorhergehenden Hubperiode vom Hubgeber (36) gemessenen Maximalhub ($h_{max}$) des Pumpenkolbens (14) bezogen wird und das Referenzsignal und das Sollhubsignal auf den konstruktiv vorgegebenen geometrischen Maximalhub ($h_{geo}$) des Pumpenkolbens (14) bezogen werden.

4. Pumpe nach Anspruch 2, dadurch gekennzeichnet, daß das Steuergerät (34) zwei Vergleicher (43, 44) enthält, deren einer von zwei Eingängen jeweils an dem Ausgang des Hubgebers (36) über eine Wichtungsstufe (42) angeschlossen ist, deren Wichtungsfaktor (k) gleich dem Verhältnis aus dem konstruktiv vorgegebenen geometrischen Maximalhub ($h_{geo}$) und dem in der unmittelbar vorhergehenden Hubperiode vom Hubgeber (36) gemessen Maximalhub ($h_{max}$) des Pumpenkolbens (14) ist, daß der andere Eingang des ersten Vergleichers (43) mit dem Referenzsignal und der andere Eingang des zweiten Vergleichers (44) mit dem Sollhubsignal belegt ist und daß die beiden Vergleicher (43, 44) derart ausgebildet sind, daß sie bei Übereinstimmung ihre Eingangssignale ein Ausgangssignal erzeugen.

5. Pumpe nach Anspruch 3, dadurch gekennzeichnet, daß das Steuergerät (34) zwei Vergleicher (43, 44) enthält, deren einer von zwei Ausgängen über eine einen ersten Wichtungsfaktor ($1/h_{max}$) aufweisende Wichtungsstufe (47) an dem Ausgang des Hubgebers (36) angeschlossen ist, daß der andere Eingang des ersten Vergleichers (43) mit dem mit einem zweiten Wichtungsfaktor ($1/h_{geo}$) gewichteten Referenzsignal und der andere Eingang des zweiten Vergleichers (44) mit dem mit dem zweiten Wichtungsfaktor ($1/h_{geo}$) gewichteten Sollhubsignal belegt ist, wobei der erste Wichtungsfaktor der Reziprokwert des in der vorangegangenen Hubperiode vom Hubgeber (36) gemessenen Maximalhubs ($h_{max}$) des Pumpenkolbens (14) und der zweite Wichtungsfaktor der Reziprokwert des konstruktiv vorgegebenen geometrischen Maximalhubs ($h_{geo}$) des Pumpenkolbens (14) ist, und daß beide Vergleicher (43, 44) derart ausgebildet sind, daß sie bei Übereinstimmung ihrer Eingangssignale ein Ausgangssignal erzeugen.

6. Pumpe nach einem der Ansprüche 1-5, dadurch gekennzeichnet, daß die konstanten Schaltverzögerungszeiten des Schaltventils (29) als Hubwege in Zuordnung zu Drehzahlen der Brennkraftmaschine in einem Kennfeld abgespeichert sind und bei der Bestimmung des Sollhubsignals und des Referenzsignals als Korrekturwerte berücksichtigt werden.

7. Pumpe nach einem der Ansprüche 1-6, dadurch gekennzeichnet, daß der Hubgeber (36) berührungslos, z.B. induktiv oder elektromagnetisch oder auf Wirbelstrombasis, z.B. als Hallsensor oder Feldplatte bzw. Differentialfeldplatte, die Momentanstellung des Pumpenkolbens (14) abtastet.

## Claims

1. Fuel injection pump, particularly of the distributor type, for internal combustion engines, with a pump plunger which delimits a pump working space and to which is imparted, in particular by means of a cam drive, at least one axially oscillating motion, with an on-off valve which is arranged in a connecting line between the pump working space and a fuel-filled low-pressure space, is electrically controlled, has two positions for opening and closing the connecting line and the closure or blocking duration of which determines the beginning of delivery and the fuel delivery quantity passing from the pump working space to injection per pump-plunger stroke, and with a control device for activating the on-off valve, which contains a control computer which calculates the desired pump-plunger delivery stroke which is effective for injection as a function of operating parameters of the internal combustion engine, such as speed, load, temperature, accelerator pedal position and the like, in particular determines it from a stored characteristic map, and outputs it as desired stroke signal, characterised in that a stroke sensor (36) recording the stroke path of the pump plunger (14) is provided which outputs as actual stroke signal the delivery stroke travelled by the pump plunger (14) from a reference point, in that the actual stroke signal is compared in the control device (34) to a reference signal corresponding to a predetermined plunger stroke of the pump plunger, on the one hand, and to the desired stroke signal, on the other hand, and in that the control device (34) generates a closing signal for the on-off valve (29) as soon as the actual stroke signal is equal to the reference signal and generates an opening signal for the on-off valve (29) as soon as the actual stroke signal is equal to the desired stroke signal.

2. Pump according to Claim 1, characterised in that, before comparison, the actual stroke signal is weighted using a correction factor (k) and in that the correction factor (k) is calculated as the quotient of the structurally predetermined geometric maximum stroke ($h_{geo}$) of the pump plunger (14) and the maximum stroke ($h_{max}$) of the pump plunger (14) measured by the stroke sensor (36) during the preceding stroke period.

3. Pump according to Claim 1, characterised in that, before comparison, the actual stroke signal is related to the maximum stroke ($h_{max}$) of the pump plunger (14) measured by the stroke sensor (36) in the preceding stroke period and the reference signal and the desired stroke signal are related to the structurally predetermined geometric maximum stroke ($h_{geo}$) of the pump plunger (14).

4. Pump according to Claim 2, characterised in that the control device (34) contains two comparators (43, 44), one of the two inputs of which is in each case connected to the output of the stroke sensor (36) via a weighting stage (42), the weighting factor (k) of which is equal to the ratio of the structurally predetermined geometric maximum stroke ($h_{geo}$) and the maximum stroke ($h_{max}$) of the pump plunger (14) measured by the stroke sensor (36) in the immediately preceding stroke period, in that the other input of the first comparator (43) has applied to it the reference signal and the other input of the second comparator (44) has applied to it the desired stroke signal and in that the two comparators (43, 44) are designed in such a way that, in the event of correspondence their [sic] input signals, they produce an output signal.

5. Pump according to Claim 3, characterised in that the control device (34) contains two comparators (43, 44), one of the two outputs of which is connected via a weighting stage (47) having a first weighting factor ($1/h_{max}$) to the output of the stroke sensor (36), in that the other input of the first comparator (43) has applied to it the reference signal weighted using a second weighting factor ($1/h_{geo}$) and the other input of the second comparator (44) has applied to it the desired stroke signal weighted using the second weighting factor ($1/h_{geo}$), the first weighting factor being the reciprocal value of the maximum stroke ($h_{max}$) of the pump plunger (14) measured by the stroke sensor (36) in the preceding stroke period and the second weighting factor being the reciprocal value of the structurally predetermined geometric maximum stroke ($h_{geo}$) of the pump plunger (14), and in that the two comparators (43, 44) are designed in such a way that, in the event of correspondence of their input signals, they produce an output signal.

6. Pump according to one of Claims 1-5, characterised in that the constant switching delay times of the on-off valve (29) are stored as stroke paths in association with speeds of the internal combustion engine in a characteristic map and are allowed for as correction values in the determination of the desired stroke signal and of the reference signal.

7. Pump according to one of Claims 1-6, characterised in that the stroke sensor (36) senses the instantaneous position of the pump plunger (14) in contactless fashion, e.g. inductively or electromagnetically or on the basis of the eddy current, e.g. as a Hall-effect sensor or magnetoresistor or differential magnetoresistor.

## Revendications

1. Pompe d'injection de carburant notamment pompe-distributrice pour moteur à combustion interne comportant un piston de pompe délimitant une chambre de travail de pompe, ce piston étant au moins mis en mouvement axial oscillant par un moyen d'entraînement à cames, une soupape de commutation à commande électrique étant prévue dans la conduite de liaison reliant la chambre de travail de la pompe et une chambre basse pression remplie de carburant, cette soupape ayant deux positions de commutation pour ouvrir et fermer la conduite de liaison, la durée de fermeture ou d'obturation définissant le début du refoulement et fixant la quantité de carburant sortant de la chambre de la pompe pour être injectée pour chaque course du piston, et un dispositif de commande pour commander la soupape de commutation, ce dispositif de commande comportant un calculateur de commande qui fournit un signal de course de consigne dépendant des paramètres de fonctionnement du moteur à combustion interne tels que la vitesse de rotation, la charge, la température, la position de la pédale d'accélérateur ou analogues et calcule la course de refoulement de consigne utile pour l'injection du piston de pompe, notamment à partir d'un champ de caractéristiques mis en mémoire en fournissant un signal de course de consigne, pompe caractérisée par un capteur de course (36) détectant la course du piston de pompe (14), ce capteur émettant un signal de course réelle correspondant à la course de refoulement parcourue par le piston de pompe (14) à partir d'un point de référence, ce signal de course réelle étant comparé dans le dispositif de commande (34) d'une part avec un signal de référence correspondant à une course prédéterminée du piston de pompe et d'autre part avec le signal de course de consigne et en ce que le dispositif de commande (34) génère un signal de fermeture de la soupape de commutation (29) dès que le signal de course réelle est égal au signal de référence et génère un signal d'ouverture pour la soupape de commutation (29) dès que le signal de la course réelle est égal au signal de la course de consigne.

2. Pompe selon la revendication 1, caractérisée en ce qu'avant la comparaison, on pondère le signal de course réelle par un coefficient de correction (k) et en ce que ce coefficient de correction (k) est le quotient de la course maximale géométrique ($h_{geo}$) déterminée par construction du piston de pompe (14) et de la course maximale ($h_{max}$) du piston de pompe (14), course mesurée par le capteur de course (36) au cours de la période de course précédente.

3. Pompe d'injection selon la revendication 1, caractérisée en ce qu'avant la comparaison, le signal de course réelle est mis en rapport avec la course maximale ($h_{max}$) du piston de pompe (14) mesurée par le capteur de course (36) au cours de la période de course précédente et le signal de référence et le signal de course de consigne sont mis en rapport avec la course maximale géométrique ($h_{geo}$) du piston de pompe (14) selon les données de construction.

4. Pompe d'injection selon la revendication 2, caractérisée en ce que le dispositif de commande (34) comporte deux comparateurs (43, 44) et l'une des deux entrées est reliée respectivement à la sortie du capteur de course (36) par l'intermédiaire d'un étage de pondération (42) dont le coefficient de pondération (k) est égal au rapport entre la course maximale géométrique ($h_{geo}$) donnée par construction et la course maximale ($h_{max}$) du piston de pompe (14), mesurée par le capteur de course (36) pendant la période de la course directement précédente, en ce que l'autre entrée du premier comparateur (43) reçoit le signal de référence et l'autre entrée du second comparateur (43) reçoit le signal de course de consigne et les deux comparateurs (43, 44) sont conçus pour fournir un signal de sortie lorsque leurs signaux d'entrée se correspondent.

5. Pompe d'injection selon la revendication 3, caractérisée en ce que le dispositif de commande (34) comporte deux comparateurs (43, 44) dont l'un l'une des deux sorties est reliée à la sortie du capteur de course (36) par l'intermédiaire d'un étage de pondération (4è) ayant un premier coefficient de pondération ($1/h_{max}$), et l'autre entrée du premier comparateur (43) reçoit le signal de référence pondéré par un second coefficient de pondération ($1/h_{geo}$) et l'autre entrée du second comparateur (44) reçoit le signal de course de consigne pondéré par le second coefficient de pondération ($1/h_{geo}$), le premier coefficient de pondération étant la valeur réciproque de la course maximale ($h_{max}$) du piston de pompe (14), mesurée par le capteur de course (36) au cours de la période de la course précédente et en ce que le second coefficient de pondération est la valeur réciproque de la course maximale ($h_{geo}$) du piston de pompe (14), géométrique, prédéterminée par construction et en ce que les deux comparateurs (43, 44) émettent un signal de sortie en cas de coïncidence de leurs signaux d'entrée.

6. Pompe d'injection selon l'une des revendications 1 à 5, caractérisée en ce que les temps de retard de commutation constants de la soupape de commutation (29) sont inscrits en mémoire sous la forme de courses associées à la vitesse de rotation du moteur à combustion interne dans un champ de caractéristiques et lors de la détermination du signal de la course de consigne et du signal de référence, ces temps de temporisation sont pris en compte comme grandeurs de correction.

7. Pompe d'injection selon l'une des revendications 1 à 6, caractérisée en ce que le capteur de course (36) fonctionne sans contact c'est-à-dire par induction ou de manière électromagnétique ou suivant les courants de Foucault comme capteur à effet Hall ou plaques de champ ou plaques à champ différentiel pour détecter la position instantanée du piston de pompe (14).

# Fig.1

Steuergerät

EP 0 356 469 B1

Fig.2

Fig.3

Fig.4